# EUROPÄISCHE PATENTSCHRIFT

(11) **EP 2 799 175 B1**
(45) Veröffentlichungstag und Bekanntmachung des Hinweises auf die Patenterteilung: **01.01.2020**
(21) Anmeldenummer: 14161629.2
(22) Anmeldetag: 26.03.2014
(51) Int. Cl.: B23D 59/00, B27G 19/10, B27B 5/06

(54) **Plattenaufteilanlage**
Panel cutting assembly
Installation à couper des panneaux

(30) Priorität: 30.04.2013 DE 102013207986
(43) Veröffentlichungstag der Anmeldung: 05.11.2014
(73) Patentinhaber: HOMAG Plattenaufteiltechnik GmbH, 75365 Calw (DE)
(72) Erfinder: Zimbakov, Darko, 71155 Altdorf (DE)
(74) Vertreter: DREISS Patentanwälte PartG mbB

(56) Entgegenhaltungen:
- WO-A1-2008/135066
- DE-B3-102006 011 131

## Beschreibung

Die Erfindung betrifft eine Plattenaufteilanlage nach dem Oberbegriff des Anspruchs 1. Eine solche Plattenaufteilanlage ist der WO2008/135066 A1 zu entnehmen.

Vom Markt her sind Plattenaufteilanlagen mit einer Trennsäge und einem Vorritzer bekannt. Durch einen solchen Vorritzer wird eine Vorritznut im Bereich der Oberfläche eines plattenförmigen Werkstücks eingebracht, welche jedoch das Werkstück nicht trennt. Der eigentliche Trennvorgang wird durch die Trennsäge durch Einbringen einer Sägefuge durchgeführt. Die Breite der Vorritznut ist üblicherweise gleich wie die Breite der Sägefuge, oder sie ist etwas größer (max. 0,1 mm) als die Breite der Sägefuge. Durch den Vorritzer wird vermieden, dass die Werkstückoberfläche beim eigentlichen Trennvorgang durch die Trennsäge ausreißt. Dies gilt insbesondere für Werkstücke mit einer Oberflächenbeschichtung.

Bei der Herstellung der Vorritznut ist es wichtig, dass diese mit der später eingebrachten Sägefuge möglichst exakt fluchtet. Daher wird in der DE 10 2006 011 131 A1 vorgeschlagen, die Relativlage einer vom Vorritzer eingebrachten Vorritznut zu einer von der Trennsäge eingebrachten Sägefuge mittels einer Videokamera zu erfassen.

Aufgabe der vorliegenden Erfindung ist es, eine Plattenaufteilanlage zu schaffen, die einfach baut und mit der ein Werkstück möglichst präzise abgelängt werden kann.

Diese Aufgabe wird durch eine Plattenaufteilanlage mit den Merkmalen des Anspruchs 1 gelöst. Vorteilhafte Weiterbildungen der Erfindung sind in Unteransprüchen angegeben.

Erfindungsgemäß wurde erkannt, dass die Breite der Sägefuge, die das Sägewerkzeug der Hauptsäge beim Sägevorgang erzeugt, von einem Sägewerkzeug zum anderen unterschiedlich sein kann, und sich auch über die Einsatzdauer eines Sägewerkzeugs hinweg verändern kann. Hierdurch wird die tatsächliche Länge eines abgesägten Werkstückstreifens beeinflusst. Erfindungsgemäß wird nun eine ohnehin vorhandene automatische Erfassungseinrichtung, die auf eine vom Sägeblatt erzeugte Sägenut oder Sägefuge gerichtet ist, dazu verwendet, einen Parameter zu erfassen, der diese Sägenut oder Sägefuge charakterisiert, und diesen Parameter bei der Ansteuerung der Vorschubvorrichtung zu berücksichtigen. Somit wird automatisch der Vorschub des Werkstücks relativ zu einer Sägelinie so eingestellt, dass mit höchster Präzision die gewünschte Länge des Werkstücksstreifens erreicht wird. Manuelle Einstellarbeiten, Vermessungsarbeiten, oder ähnliches sind praktisch nicht mehr erforderlich. Hierdurch wird die Effizienz der erfindungsgemäßen Plattenanteilanlage verbessert.

Als bevorzugte Weiterbildung der Erfindung wird vorgeschlagen, dass der von der Erfassungseinrichtung erfasste Parameter eine Breite der Sägenut oder Sägefuge umfasst. Dieser Parameter kann auf besonders einfache Weise unmittelbar bei der Ansteuerung der Vorschubvorrichtung genutzt werden.

Aus dem erfassten Parameter kann auch eine aktuelle Breite des Sägewerkzeugs ermittelt werden. Damit erhält man eine wichtige Information, die beispielsweise bei der Qualitätskontrolle oder auch bei der Prüfung, ob das richtige Werkzeug eingesetzt wurde, verwendet werden kann.

Durch einen Vergleich der ermittelten aktuellen Breite des Sägewerkzeugs mit einer zuvor manuell eingegebenen Breite erhält man weitere nützliche Informationen, die für die Qualitätssicherung, das Erkennen eines Eingabefehlers eines Maschinenbedieners, die Verschleißermittlung, etc. genutzt werden können.

Bevorzugt ist auch, dass die Steuer- und/oder Regeleinrichtung eine Vorschubeinrichtung der Trennsäge in Abhängigkeit von den erfassten Parameter ansteuert. Es wurde nämlich erkannt, dass die aktuelle Breite einer erzeugten Sägefuge oder Sägenut auch von der Geschwindigkeit abhängen kann, mit der das Sägewerkzeug längs zur Sägelinie bewegt wird, und auch von dem dynamischen Verhalten des Sägewerkzeugs abhängen kann. Auch diese Weiterbildung dient zur Erhöhung der Schnittpräzision. Dabei kann unter Berücksichtigung des erfassten Parameters ein werkzeugspezifischer Korrekturwert ermittelt werden.

Die Steuer- und/oder Regeleinrichtung kann vorzugsweise eine Warnmeldung erzeugen und/oder die manuell eingegebene Breite des Sägewerkzeugs durch die ermittelte Breite ersetzen, wenn eine Differenz zwischen der ermittelten und der manuell angegebenen Breite des Sägewerkzeugs einen Grenzwert erreicht und/oder überschreitet. Fehlfunktionen der Plattenaufteilanlage beispielsweise durch einen eingetretenen starken Verschleiß oder eine Fehljustierung des Sägeblatts werden hierdurch erkannt und vermieden.

Material wird eingespart, wenn vorzugsweise die von der Erfassungseinrichtung beobachtete Sägenut oder Sägefuge in einem Abfall-Werkstück erzeugt wird.

Vorzugsweise kann die automatische Erfassungseinrichtung auch dazu verwendet werden, einen Parameter zu erfassen, der einen Sägespalt in einem Maschinentisch charakterisiert. Hierbei kann es sich beispielsweise um eine Breite des Sägespalts handeln. Auf diese Weise kann rechtzeitig erkannt werden, wenn der Sägespalt eine maximal zulässige Breite überschreitet und hierdurch die Sicherheit im Betrieb der Plattenaufteilanlage nicht mehr gewährleistet ist. Hierzu dient beispielsweise, dass eine Meldung erzeugt wird, wenn der erfasste Parameter einen Grenzwert erreicht und/oder überschreitet.

Bevorzugt ist auch, dass die automatische Erfassungseinrichtung oberhalb eines Niveaus eines Maschinentisches angeordnet ist. Nachfolgend wird ein Ausführungsbeispiel der vorliegenden Erfindung unter Bezugnahme auf die beiliegende Zeichnung näher erläutert. In der Zeichnung zeigen.
- Figur 1: eine Seitenansicht auf einen Bereich einer Plattenaufteilanlage mit einer Trennsäge, einem Vorritzer und einer automatischen Erfassungseinrichtung, sowie einen Schnitt durch ein gerade bearbeitetes Werkstück;
- Figur 2: eine Draufsicht auf eine Vorritznut und eine Sägenut im Werkstück von Figur 1;
- Figur 3: einen Schnitt längs der Linie III-III von Figur 2; und
- Figur 4: einen Schnitt längs der Linie IV-IV von Figur 1.

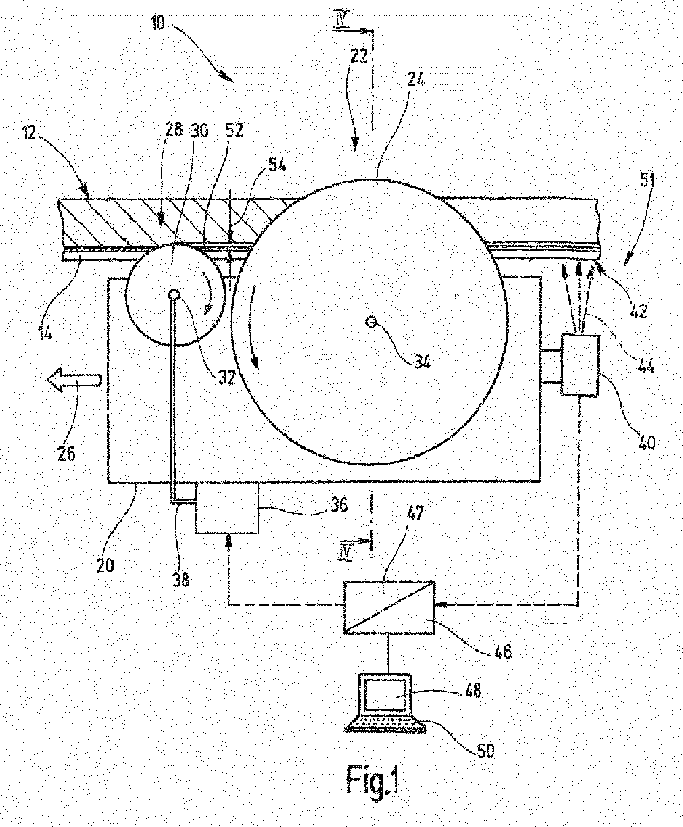

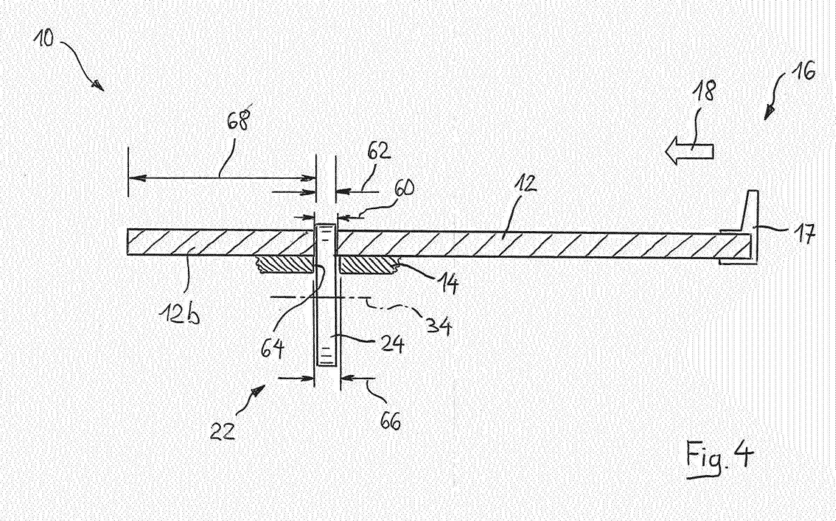

Eine Plattenaufteilanlage trägt in Figur 1 insgesamt das Bezugszeichen 10. Sie dient zum Sägen eines Werkstücks 12 und umfasst einen Maschinentisch 14, auf dem das Werkstück 12 liegt. Wie aus Figur 4 ersichtlich ist, umfasst die Plattenaufteilanlage 10 auch eine Vorschubvorrichtung 16 in Form eines nicht gezeigten portalartigen Programmschiebers, an dem mehrere Spannzangen 17 angebracht sind, die an einem in einer Vorschubrichtung 18 gesehen hinteren Rand des Werkstücks 12 angreifen. Mittels der Vorschubvorrichtung 16 kann das Werkstück 12 längs zur Vorschubrichtung 18 bewegt werden.

Die Plattenaufteilanlage 10 umfasst ferner einen Vorschubwagen 20, an dem eine Trennsäge 22 mit einem Sägewerkzeug in Form eines rotierenden Trennsägeblatts 24 befestigt ist. Während eines Sägevorgangs kann der Vorschubwagen 20 mittels eines nicht gezeigten Antriebs in Vorschubrichtung (Pfeil 26) bewegt werden. In Vorschubrichtung 26 gesehen vor der Trennsäge 22 ist ein Vorritzer 28 mit einem Vorritzerblatt 30 am Vorschubwagen 20 befestigt. Das Vorritzerblatt 30 wird im vorliegenden Ausführungsbeispiel um eine Achse 32 im Uhrzeigersinn angetrieben, wohingegen das Trennsägeblatt 24 vorliegend um eine Achse 34 entgegen dem Uhrzeigersinn angetrieben wird.

Am Vorschubwagen 20 befindet sich noch eine elektrische Verstelleinrichtung 36, mit der, wie durch eine Doppellinie 38 angedeutet ist, das Vorritzerblatt 30 senkrecht zur Blattebene von Figur 1 verstellt werden kann. Ferner ist am Vorschubwagen 20 noch eine automatische Erfassungseinrichtung in Form einer Videokamera 40 angebracht, welche auf einen in Vorschubrichtung 26 gesehen unmittelbar hinter der Trennsäge 22 liegenden Schnittbereich 42 des Werkstücks 12 gerichtet ist, wie durch Visierpfeile 44 angedeutet ist. Äquivalent zu einer Videokamera wäre eine Laser-Abtasteinrichtung oder eine Ultraschall-Abtasteinrichtung verwendet werden.

Die Videokamera 40 liefert entsprechende Signale an eine Auswerteeinrichtung 46 einer Steuer- und Regeleinrichtung 47, die auch einen Monitor 48 und eine Eingabeeinrichtung 50 umfasst. Die Steuer- und Regeleinrichtung 47 steuert wiederum die Verstelleinrichtung 36 an, sowie die Vorschubvorrichtung 16 und den nicht gezeigten Antrieb des Vorschubwagens 20.

Im normalen Betrieb wird durch den Vorritzer 28 mit dem Vorritzerblatt 30 zunächst eine Vorritznut in das Werkstück 12 eingebracht, deren Tiefe etwas größer ist als die Dicke einer Oberflächenbeschichtung des Werkstücks 12. Anschließend wird vom Trennsägeblatt 24 der Trennsäge 22 der eigentliche Trennschnitt durchgeführt, bei dem eine von der Vorritznut ausgehende zusätzliche Sägefuge in das Werkstück 12 eingesägt wird.

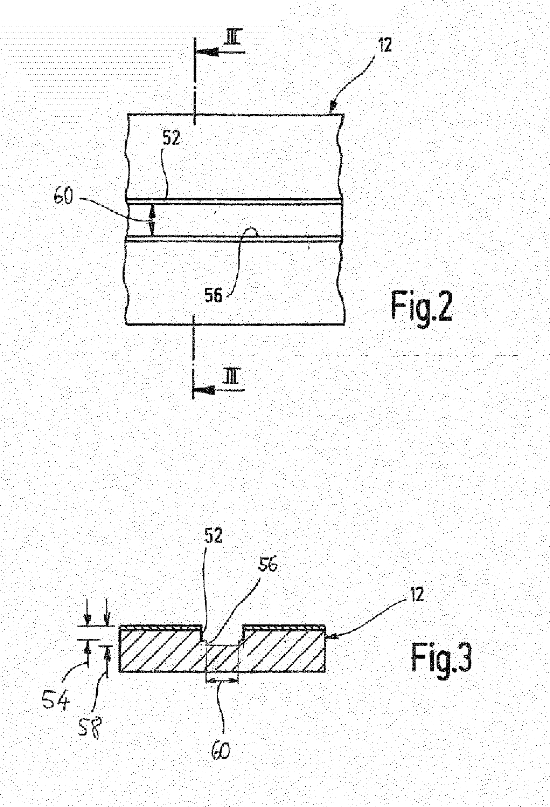

In einem Prüfbetrieb (Figuren 2 und 3) wird durch den Vorritzer 28 mit dem Vorritzerblatt 30 zunächst eine Vorritznut 52 in das Werkstück 12 eingebracht, deren Tiefe 54 etwas größer ist als die Dicke der Oberflächenbeschichtung des Werkstücks 12. Anschließend wird vom Trennsägeblatt 24 der Trennsäge 22 eine von der Vorritznut 52 ausgehende zusätzliche Sägenut 56 mit einer Tiefe 58 in das Werkstück 12 eingesägt. Möglich ist in dem Prüfbetrieb auch, nur die Sägenut 56 zu erzeugen, ohne vorher die Vorritznut 52 zu erzeugen. Ferner ist es möglich, anstelle einer Sägenut, deren Tiefe geringer ist als die Werkstückdicke und die insoweit das Werkstück nicht durchtrennt, eine Sägefuge einzubringen, deren Tiefe größer ist als die Werkstückdicke, und die insoweit das Werkstück durchtrennt.

In diesem Prüfbetrieb wird von der Videokamera 40 der Schnittbereich 42 unmittelbar hinter der Trennsäge 22 anvisiert. Die Blickachse der Videokamera 40 liegt dabei ungefähr in einer Mittelebene des Trennsägeblatts 24.

Dabei wird von der Videokamera 40 eine Breite 60 der Sägenut 56 erfasst, bei der es sich insoweit um einen Parameter handelt, der die von dem Trennsägeblatt 24 erzeugte Sägenut 56 charakterisiert.

Die Videokamera 40 liefert ein entsprechendes Signal an die Steuer- und Regeleinrichtung 47, welche aus der erfassten Breite 60 der Sägenut 56 eine Breite 62 (Figur 4) des Trennsägeblatts 24 ermittelt. Die Videokamera 40 ist ferner auf einen Sägespalt 64 im Maschinentisch 14 gerichtet. Sie ist daher auch in der Lage, eine Breite 66 des Sägespalts 64 zu erfassen, bei der es sich insoweit um einen Parameter handelt, der den Sägespalt 64 im Maschinentisch 14 charakterisiert. Um Material zu sparen, werden im übrigen sowohl die Vorritznut 52 als auch die Sägenut 56 in einem Abfall-Werkstück 12 erzeugt.

Die in dem genannten Prüfbetrieb erfassten Parameter 60 und 66 werden wie folgt verwendet:
In der Steuer- und Regeleinrichtung 47 ist ein Schnittplan hinterlegt, aus dem hervorgeht, welche Länge 68 ein abgesägtes Teilwerkstück 12b (Figur 4) haben soll. Hierzu wird das Werkstück 12 mittels der Vorschubvorrichtung 16 entsprechend relativ zur Trennsäge 22 positioniert. Um die gewünschte Länge 68 mit möglichst hoher Präzision zu erreichen, wird hierbei die Breite 62 des Trennsägeblatts 24 berücksichtigt. Hierzu wird unmittelbar nach einem Werkzeugwechsel von einer Bedienperson manuell eine vorab manuell gemessene Breite des Trennsägeblatts 24 mittels der Eingabeeinrichtung 50 eingegebenen.

Die tatsächliche Breite 62 des Trennsägeblatts 24 kann jedoch von der manuell eingegebene Breite abweichen. Beispielsweise kann es durch Verschleiß zu einer reduzierten Breite 62 kommen. Möglich ist aber auch eine geringfügige Fehlstellung des Trennsägeblatts 24, welche zu einer "virtuellen" größeren Breite 62 des Trennsägeblatts 24 führt. Ist die tatsächliche Breite 62 des Trennsägeblatts 24 jedoch größer als bei der Ansteuerung der Vorschubvorrichtung 16 angenommen, ist die Länge 68 des Teilwerkstücks 12b geringer als gewünscht, und ist die tatsächliche Breite 62 kleiner als angenommen, ist die Länge 68 des Teilwerkstücks 12b größer als gewünscht.

Dem wird durch die in dem oben beschriebenen Prüfbetrieb erfasste Breite 60 der vom Trennsägeblatt 24 erzeugten Sägenut 56 begegnet. Entweder wird diese Breite 60 unmittelbar bei der Ansteuerung der Vorschubvorrichtung 16 berücksichtigt, oder es wird die aus dieser ermittelte Breite 62 des Trennsägeblatts 24 berücksichtigt. Somit ist es möglich, durch eine regelmäßige Vornahme des oben beschriebenen Prüfbetriebs mittels der Videokamera 40 Kenntnis von der aktuellen Breite 62 des Trennsägeblatts 24 beziehungsweise der aktuellen Breite 60 der Sägenut 56 zu haben, so dass die Vorschubvorrichtung 16 entsprechend präzise angesteuert werden kann. Ein zuvor eingegebener manueller Wert für die Breite des Trennsägeblatts 24 wird dann durch die ermittelte aktuelle Breite 62 ersetzt.

Dabei vergleicht die Steuer- und Regeleinrichtung 47 die ermittelte aktuelle Breite 62 des Trennsägeblatts 24 mit der manuell eingegebenen Breite des Trennsägeblatts 24 und gibt am Monitor 48 eine Warnmeldung aus, wenn die Differenz zwischen den beiden Breiten einen vorgegebenen Grenzwert überschreitet. Ferner kann auch das oben bereits erwähnte Ersetzen der manuell eingegebenen Breite des Sägewerkzeugs 24 durch die ermittelte Breite 62 abhängig davon gemacht werden, ob die Differenz den Grenzwert erreicht beziehungsweise überschreitet.

Auch die Ansteuerung des Antriebs des Vorschubwagens 20 der Trennsäge 22 kann abhängig von der erfassten Breite der Sägenut 56 erfolgen. Auch hierdurch kann die Präzision bei der Einstellung der Länge 68 des Teilwerkstücks 12b verbessert werden.

Wie oben erwähnt wurde, erfasst die Videokamera 40 auch den Sägespalt 64 im Maschinentisch 14. Auch dessen Breite 66 kann sich im Laufe der Zeit verändern. Ist die Breite 66 zu groß, wird die Sicherheit des Betriebs der Plattenaufteilanlage 10 tangiert. Daher erzeugt die Steuer- und Regeleinrichtung 47 eine Warnmeldung am Monitor 48, wenn die Breite 66 des Sägespalts 64 einen Grenzwert erreicht oder überschreitet.

## Patentansprüche

1. Plattenaufteilanlage (10) mit einer Trennsäge (22) mit einem Sägewerkzeug (24), mit einer automatischen Erfassungseinrichtung (40), welche an einem bearbeiteten Werkstück (12) mindestens einen Parameter (60) erfassen kann, der eine von dem Sägewerkzeug (24) erzeugte Sägenut (56) oder Sägefuge charakterisiert, und welche dem erfassten Parameter (60) entsprechende Signale einer Steuer- und/oder Regeleinrichtung (47) bereitstellt, und mit einer von der Steuer- und/oder Regeleinrichtung (47) angesteuerten Vorschubvorrichtung (16), welche das Werkstück (12) der Trennsäge (22) zuführt, **dadurch gekennzeichnet, dass** die Steuer- und/oder Regeleinrichtung (47) so ausgebildet ist, dass sie bei einer Ansteuerung der Vorschubvorrichtung (16) den von der Erfassungseinrichtung (40) erfassten Parameter (60), der eine zuvor von dem Sägewerkzeug (24) erzeugte Sägenut (56) oder Sägefuge charakterisiert, berücksichtigt.

2. Plattenaufteilanlage (10) nach Anspruch 1, **dadurch gekennzeichnet, dass** der von der Erfassungseinrichtung (40) erfasste Parameter eine Breite (60) der Sägenut (56) oder Sägefuge ist.

3. Plattenaufteilanlage (10) nach einem der vorhergehenden Ansprüche, **dadurch gekennzeichnet, dass** die Steuer- und/oder Regeleinrichtung (47) aus dem erfassten Parameter (60) eine aktuelle Breite (62) des Sägewerkzeugs (24) ermittelt.

4. Plattenaufteilanlage (10) nach Anspruch 3, **dadurch gekennzeichnet, dass** die Steuer- und/oder Regeleinrichtung (47) die ermittelte aktuelle Breite (62) des Sägewerkzeugs (24) mit einer manuell eingegebenen Breite des Sägewerkzeugs (24) vergleicht.

5. Plattenaufteilanlage (10) nach einem der vorhergehenden Ansprüche, **dadurch gekennzeichnet, dass** die Steuer- und/oder Regeleinrichtung (47) eine Vorschubeinrichtung (20) der Trennsäge (22) in Abhängigkeit von dem erfassten Parameter (60) ansteuert.

6. Plattenaufteilanlage (10) nach Anspruch 5, **dadurch gekennzeichnet, dass** die Steuer- und/oder Regeleinrichtung (47) unter Berücksichtigung des erfassten Parameters (60) einen werkzeugspezifischen Korrekturwert ermittelt.

7. Plattenaufteilanlage (10) nach einem der vorhergehenden Ansprüche, **dadurch gekennzeichnet, dass** die Steuer- und/oder Regeleinrichtung (47) eine Warnmeldung erzeugt und/oder die manuell eingegebene Breite des Sägewerkzeugs (24) durch die ermittelte Breite (62) ersetzt, wenn eine Differenz zwischen der ermittelten und der manuell eingegebenen Breite des Sägewerkzeugs (24) einen Grenzwert erreicht und/oder überschreitet.

8. Plattenaufteilanlage (10) nach einem der vorhergehenden Ansprüche, dass die Steuer- und/oder Regeleinrichtung (47) so ausgebildet ist, dass die Sägenut (56) oder Sägefuge, deren charakterisierender Paramater (60) bei der Ansteuerung der Vorschubvorrichtung (16) berücksichtig wird, in einem Abfall-Werkstück (12) erzeugt wird.

9. Plattenaufteilanlage (10) nach einem der vorhergehenden Ansprüche, **dadurch gekennzeichnet, dass** die automatische Erfassungseinrichtung (40) dazu ausgebildet ist, mindestens einen Parameter (66) zu erfassen, der einen Sägespalt (64) in einem Maschinentisch (14) charakterisiert.

10. Plattenaufteilanlage (10) nach Anspruch 9, **dadurch gekennzeichnet, dass** der erfasste Paramater eine Breite (66) des Sägespalts (64) ist.

11. Plattenaufteilanlage (10) nach einem der Ansprüche 9 oder 10, **dadurch gekennzeichnet, dass** die Steuer- und/oder Regeleinrichtung (47) eine Meldung erzeugt, wenn der erfasste Parameter (66) einen Grenzwert erreicht und/oder überschreitet.

12. Plattenaufteilanlage (10) nach einem der vorhergehenden Ansprüche, **dadurch gekennzeichnet, dass** die automatische Erfassungseinrichtung (40) oberhalb eines Niveaus eines Maschinentisches (14) angeordnet ist.

## Claims

1. Panel dividing system (10) comprising a cutting saw (22) with a sawing tool (24), comprising an automatic detection device (40) which can detect at least one parameter (60) on a machined workpiece (12) that characterizes a sawing groove (56) or sawing joint produced by the sawing tool (24), and which provides signals corresponding to the detected parameter (60) to an open-loop and/or closed-loop controller (47), and comprising a feed apparatus (16) which is controlled by the open-loop and/or closed-loop controller (47) and feeds the workpiece (12) to the cutting saw (22), **characterized in that** the open-loop and/or closed-loop controller (47) is designed such that when the feed apparatus (16) is controlled, the controller takes into account the parameter (60) detected by the detection device (40) that characterizes a sawing groove (56) or sawing joint previously produced by the sawing tool (24).

2. Panel dividing system (10) according to claim 1, **characterized in that** the parameter detected by the detection device (40) is a width (60) of the sawing groove (56) or sawing joint.

3. Panel dividing system (10) according to any of the preceding claims, **characterized in that** the open-loop and/or closed-loop controller (47) determines a current width (62) of the sawing tool (24) from the detected parameter (60).

4. Panel dividing system (10) according to claim 3, **characterized in that** the open-loop and/or closed-loop controller (47) compares the determined current width (62) of the sawing tool (24) with a manually entered width of the sawing tool (24).

5. Panel dividing system (10) according to any of the preceding claims, **characterized in that** the open-loop and/or closed-loop controller (47) controls a feed device (20) of the cutting saw (22) depending on the detected parameter (60).

6. Panel dividing system (10) according to claim 5, **characterized in that** the open-loop and/or closed-loop controller (47) determines a tool-specific correction value by taking into account the detected parameter (60).

7. Panel dividing system (10) according to any of the preceding claims, **characterized in that** the open-loop and/or closed-loop controller (47) generates a warning message and/or replaces the manually entered width of the sawing tool (24) with the determined width (62) if a difference between the determined width and the manually entered width of the sawing tool (24) reaches and/or exceeds a threshold value.

8. Panel dividing system (10) according to any of the preceding claims, **characterized in that** the open-loop and/or closed-loop controller (47) is designed such that the sawing groove (56) or sawing joint, the characterizing parameter (60) of which is taken into account when the feed device (16) is controlled, is produced in a waste workpiece (12).

9. Panel dividing system (10) according to any of the preceding claims, **characterized in that** the automatic detection device (40) is designed to detect at least one parameter (66) which characterizes a sawing gap (64) in a machine table (14).

10. Panel dividing system (10) according to claim 9, **characterized in that** the detected parameter is a width (66) of the sawing gap (64).

11. Panel dividing system (10) according to claim 9 or claim 10, **characterized in that** the open-loop and/or closed-loop controller (47) generates a message when the detected parameter (66) reaches and/or exceeds a threshold value.

12. Panel dividing system (10) according to any of the preceding claims, **characterized in that** the automatic detection device (40) is arranged above a level of a machine table (14).

## Revendications

1. Installation à diviser des panneaux (10) avec une scie à tronçonner (22) ayant un outil de sciage (24), avec un dispositif de détection automatique (40) qui peut détecter, sur une pièce (12) usinée, au moins un paramètre (60) qui caractérise une rainure sciée (56) ou un joint scié réalisé(e) par ledit outil de sciage (24), et qui fournit, à un dispositif de commande et/ou de régulation (47), des signaux correspondant au paramètre (60) détecté, ainsi qu'avec un dispositif d'avance (16) qui est commandé par ledit dispositif de commande et/ou de régulation (47) et qui amène la pièce (12) à la scie à tronçonner (22), **caractérisée par le fait que** le dispositif de commande et/ou de régulation (47) est conçu de telle sorte que, lors d'une commande dudit dispositif d'avance (16), il prend en compte le paramètre (60) détecté par le dispositif de détection (40), qui caractérise une rainure sciée (56) ou un joint scié réalisé(e) auparavant par ledit outil de sciage (24).

2. Installation à diviser des panneaux (10) selon la revendication 1, **caractérisée par le fait que** le paramètre détecté par le dispositif de détection (40) est une largeur (60) de la rainure sciée (56) ou du joint scié.

3. Installation à diviser des panneaux (10) selon l'une quelconque des revendications précédentes, **caractérisée par le fait que** le dispositif de commande et/ou de régulation (47) détermine une largeur (62) courante de l'outil de sciage (24) à partir du paramètre (60) détecté.

4. Installation à diviser des panneaux (10) selon la revendication 3, **caractérisée par le fait que** le dispositif de commande et/ou de régulation (47) compare la largeur (62) courante déterminée de l'outil de sciage (24) à une largeur manuellement entrée de l'outil de sciage (24).

5. Installation à diviser des panneaux (10) selon l'une quelconque des revendications précédentes, **caractérisée par le fait que** le dispositif de commande et/ou de régulation (47) commande un dispositif d'avance (20) de la scie à tronçonner (22) en fonction du paramètre (60) détecté.

6. Installation à diviser des panneaux (10) selon la revendication 5, **caractérisée par le fait que** le dispositif de commande et/ou de réglage (47) détermine une valeur de correction spécifique à l'outil en prenant en compte le paramètre (60) détecté.

7. Installation à diviser des panneaux (10) selon l'une quelconque des revendications précédentes, **caractérisée par le fait que** le dispositif de commande et/ou de régulation (47) génère un message d'avertissement et/ou remplace la largeur entrée manuellement de l'outil de sciage (24) par la largeur (62) déterminée, si une différence entre la largeur déterminée et celle entrée manuellement de l'outil de sciage (24) atteint et/ou dépasse une valeur limite.

8. Installation à diviser des panneaux (10) selon l'une quelconque des revendications précédentes, **caractérisée par le fait que** le dispositif de commande et/ou de régulation (47) est conçu de manière à ce que la rainure sciée (56) ou le joint scié dont le paramètre caractérisant (60) est pris en compte lors de la commande du dispositif d'avance (16) soit réalisé(e) dans une pièce (12) de rebut.

9. Installation à diviser des panneaux (10) selon l'une quelconque des revendications précédentes, **caractérisée par le fait que** le dispositif de détection automatique (40) est adapté pour détecter au moins un paramètre (66) qui caractérise une fente de sciage (64) dans une table de machine (14).

10. Installation à diviser des panneaux (10) selon la revendication 9, **caractérisée par le fait que** le paramètre détecté est une largeur (66) de la fente de sciage (64).

11. Installation à diviser des panneaux (10) selon l'une quelconque des revendications 9 ou 10, **caractérisée par le fait que** le dispositif de commande et/ou de régulation (47) génère un message lorsque le paramètre (66) détecté atteint et/ou dépasse une valeur limite.

12. Installation à diviser des panneaux (10) selon l'une quelconque des revendications précédentes, **caractérisée par le fait que** le dispositif de détection automatique (40) est agencé au-dessus d'un niveau d'une table de machine (14).
